# EUROPÄISCHE PATENTSCHRIFT

(11) **EP 2 016 528 B1**
(45) Veröffentlichungstag und Bekanntmachung des Hinweises auf die Patenterteilung: **26.08.2009**
(21) Anmeldenummer: 06775207.1
(22) Anmeldetag: 22.09.2006
(51) Int. Cl.: G06K 7/00, H04L 12/56

(54) **Verfahren zum Betrieb eines RFID-Netzwerks**
Method for operating an RFID network
Procédé permettant de faire fonctionner un réseau RFID

(30) Priorität: 04.05.2006 CH 725062006
(43) Veröffentlichungstag der Anmeldung: 21.01.2009
(73) Patentinhaber: Elektrobit Wireless Communications Ltd., 90570 Oulu (FI)
(72) Erfinder: KÜNG, Roland, CH-8633 Wolfshausen (CH); DEUBER, Patrick, CH-8853 Lachen (CH)
(74) Vertreter: Rentsch & Partner
(86) Internationale Anmeldenummer: PCT/CH2006/000516
(87) Internationale Veröffentlichungsnummer: WO 2007/128142

(56) Entgegenhaltungen:
- WO-A-20/06037239
- US-A1- 2006 022 800
- "Electromagnetic compatibility and Radio spectrum Matters (ERM)" ETSI STANDARDS, EUROPEAN TELECOMMUNICATIONS STANDARDS INSTITUTE, SOPHIA-ANTIPO, FR, Bd. ERM-TG34, Nr. V111, Dezember 2005 (2005-12), XP014032241 ISSN: 0000-0001

## Beschreibung

Die vorliegende Erfindung fällt in das Gebiet der automatischen Identifikation (Funkerkennung) und Lokalisierung von Objekten; sie betrifft ein Verfahren zum Betrieb eines Radio-Frequency-Identification-Netzwerks (RFID-Netzwerks), bestehend aus einer Anzahl Schreib-/Lesestationen, welchen auf einem für das Bearbeiten von einer Anzahl elektronischer Etiketten notwendigen Schreib-/Lesesignal ein Reader Service Signal aufmoduliert ist.

### Stand der Technik

Für RFID Applikationen stehen je nach Land mehrere Frequenzkanäle zur Verfügung. In Anwendungen mit wenigen Schreib-/Lesestationen genügt es, diese auf verschiedenen Frequenzkanälen zu betreiben, um eine gegenseitige Störung zu verhindern. In Systemen mit einer grösseren Anzahl Schreib-/Lesestationen reicht die Anzahl Frequenzkanäle nicht mehr aus, die Schreib-/Lesestationen müssen sich die Kanäle und die Zeitachse deshalb teilen. Infolge der hohen Sendeleistung (um 1 Watt), welche eine Schreib-/Lesestation ausstrahlt, um die zu lesenden elektronischen Etiketten (im Folgenden kurz: Etiketten oder Tag) mit Energie versorgen zu können, ist die Reichweite der Schreib-/Lesestationen bezogen auf ihre empfindlichen Empfänger sehr gross (hunderte von Metern). Dabei treten leicht gegenseitige Störungen der Abfragvorgänge auf, wenn beispielsweise nur schon zwei Stationen gleichzeitig in demselben Frequenzkanal senden.

Nach dem Stand der Technik kann dies durch eine Synchronisationsleitung unter den Schreib-/Lesestationen verhindert werden und eine fixe Zuteilung der Ressourcen bewerkstelligt werden; dies ist zum Beispiel offenbart mit, dem Triggerbus in der WO0036553. Das Verlegen solcher zusätzlichen Leitungen ist in grösseren Räumen wenig attraktiv. Die EP1628238 zeigt eine Methode zur Synchronisation mehrerer Schreib-/Lesestationen, welche alle auf einem einzigen Frequenzkanal arbeiten, wobei periodisch Synchronisationsmuster von einigen Schreib-/Lesestationen zeitlich zwischen die Schreib-/Lesevorgänge eingeschoben werden, auf die sich die anderen Schreib-/Lesestationen ausrichten. Diese Methode ist wenig geeignet, wenn mehrere Frequenzkanäle benutzt werden (müssen) und ein Verfahren nach dem so genannten Frequency Hopping oder Frequency Agility benutzt wird, besonders dann, wenn mehr Schreib-/Lesestationen als Frequenzkanäle oder Zeitschlitze vorhanden sind. Es ist zudem nicht gelöst, wie ein grösseres RFID-Netzwerk effizient und sicher in Betrieb gesetzt werden kann; eine Synchronisation alleine genügt hier nicht.

Die WO2006/037239 beschreibt zwar ein Kommunikationsmittel, mit dem Schreib-/Lesestationen untereinander Informationen austauschen können, hingegen bleibt auch hier die Fragen nach der Inbetriebnahme mehrerer Schreib-/Lesestationen in einem Netzverbund offen. Als Kommunikationsmittel wird ein so genanntes Reader Service Signal offenbart (im Folgenden kurz: RSSignal), mit welchem direkt auf dem Physical Air Interface eine Kommunikation untereinander ohne Zeitverlust für Schreib-/Lesevorgänge durchführbar ist.

Nach EP 1638036 gibt es speziell ausgebaute Schreib-/Lesestationen, welche in einer zusätzlichen Auswerte-/Steuereinheit die Belegung von Frequenzkanälen messen können, danach eine Zuteilung der Sendekanäle und der Sendeleistung an die Schreib-/Lesestationen vornehmen und über eine Drahtverbindung (Datenbus) den Schreib-Lesestationen zuweisen. Diese Messfunktion ist Stand der Technik im Funkbereich und wird meist auf Grund der Analyse der Empfangsignalstärke (RSSI) durchgeführt. Die beschriebene Methode ist nur dann brauchbar, wenn wenige Schreib-/Lesestationen betrieben werden, so dass jeder Schreib-/Lesestation mindestens ein Frequenzkanal zugewiesen werden kann. Die Methode kann nur schlecht oder gar nicht auf dynamische Veränderungen reagieren. Es wird zudem zusätzlich ein drahtgebundener Datenbus benötigt, dessen Zeitverhalten nicht bekannt ist und damit nicht ohne weiteres das synchrone Arbeiten mehrerer Schreib-/Lesestationen auf einer Frequenz oder nach dem Frequency Hopping Verfahren erlaubt.

Aus der US2005/0088284 ist bekannt, das Schreib-/Lesestationen mit einem Draht gebundenen Datenbus (Backbone) betrieben werden. Jede Schreib-/Lesestation enthält eine Tabelle von störenden Nachbarn und reserviert sich durch Übertragung eines so genannten Tag Operation (TO) Datenpakets und eines End Tag Operation (ETO) Datenpakets auf diesem Bus einen Zeitschlitz für einen Schreib-/Lesevorgang. Ferner ist es möglich, dass einzelne Schreib-/Lesestationen auch Etiketten lesen können, die mit Hilfe von einer benachbarten Schreib-/Lesestation mit Energie versorgt werden. Durch die Identifizierung der Schreib-/Lesestationen in einem Netzwerk können die beteiligten Schreib-/Lesestationen die erhaltene Etiketteninformation untereinander austauschen. Bevor eine Schreib-/Lesestation auf Sendung geht, prüft sie, ob keine andere Schreib-/Lesestation im Abfragebetrieb arbeiten möchte (Listen Before Talk (LBT) auf dem Datenbus (Backbone)). Der Abfragezeitschlitz wird von der aktiven Schreib-/Lesestation durch ein TO und ETO Paket auf dem Backbone-Netzwerk reserviert (Slot Reservation). Der Nachteil dieses Netzwerks besteht in der notwendigen Verkabelung zwischen den Schreib-/Lesestationen und der Verwendung eines Servers. Eine Schreib-/Lesestation kann nicht ohne weiteres mit neu hinzugekommenen Schreib-/Lesestationen in Verbindung treten. Es ist jedes Mal eine Neukonfiguration nötig. Nachteilig ist, dass die Interferenzsituation nicht auf Grund der tatsächlichen aktuellen Interferenz auf dem RF-Kanal beurteilt wird und somit eine konservative Benutzung bei grösseren Netzwerken resultiert. Zudem können auf dem Datenbus Kollisionen entstehen, welche gelöst werden müssen und damit Zeit verschenkt wird.

Nach der WO2006/015349 arbeitet das Schreib-/Lesestationen-Netzwerk mit einer zentralen Einheit, dem so genannten Mid-Level Prozessor, welcher über eine Kabelverbindung an einen Server angeschlossen ist. Die Schreib-/Lesestationen können die Schreib-/Lesesignale von anderen Schreib-/Lesestationen empfangen und bewerten. Die gesammelten Daten über potentielle Interferenzen werden im Mid-Level Prozessor zu einem Satz von Betriebsparametern aufbereitet, der es erlaubt ein Netzwerk aufzubauen und zu betreiben. Das Verfahren ist sehr komplex. Die Schreib-/Lesestationen sind über einen drahtgebundenen Backbone untereinander verknüpft und es wird eine direkte Kommunikation zwischen den Schreib-/Lesestationen ermöglicht. Der so genannte Mid-Level Prozessor, der die Netzwerk-Operation zentral steuert, ist ebenfalls mit dem Backbone verbunden. Sende- und Empfangsteil einer Schreib-/Lesestation sind in bekannter Weise unabhängig funktionsfähig und erlauben einer Schreib-/Lesestation das Mithören einer Abfrage, welche durch eine andere Schreib-/Lesestation getätigt wird. Bei dieser Interreader Signal Transmission genannten Betriebsart bezieht sich der Begriff "Interreader" auf die Beteiligung zweier Schreib-/Lesestationen an einem einzigen Lesevorgang und nicht auf die Kommunikation zwischen den Schreib-/Lesestationen.

Die mithörende Schreib-/Lesestation kann so zwar die Informationen der von der anderen Schreib-/Lesestation an die Etikette gesandten Daten und die Etiketten-Antwort erfahren, es ist aber kein expliziter Datenaustausch zum Betrieb eines Netzwerkes implementiert. Eine allfällige Identifikation der Schreib-/Lesestation muss mit Hilfe der gewonnen Daten im Mid-Level Prozessor zuerst bestimmt und über den Backbone übertragen werden. Immerhin kann das System auf diese Weise auch eine Interferenzanalyse durchführen und die gewonnen Daten über die anderen Schreib-/Lesestationen an den Mid-Level Prozessor senden, um einen störungsfreien Betrieb aufzusetzen und die Schreib-/Lesestationen wiederum zu instruieren.

### Darstellung der Erfindung

Es ist deshalb Aufgabe der vorliegenden Erfindung, ein Verfahren zur Inbetriebnahme eines RFID-Netzwerks dahingehend weiter zu bilden, dass eine Anzahl Schreib-/Lesestationen frei von einer Draht gebundenen Kommunikation auf dem Physical Air Interface einen ungestörten, synchronen Netzbetrieb durchführen können, unter Ausnutzung der zur Verfügung stehenden Frequenzkanälen und möglichst kurzen Zeitschlitzen.

Die der Erfindung zugrunde liegende Aufgabe für das Verfahren zum Betrieb eines RFID-Netzwerks wird gelöst durch die Merkmale des unabhängigen Anspruchs 1. Alternative Ausgestaltungen der Erfindung sind Gegenstand der abhängigen Ansprüche 2 bis 13.

Der Kern der Erfindung ist darin zu sehen, dass eine Sammelstation den Schreib-/Lesestationen periodisch und/oder auf Abruf entsprechende Strukturdaten und Koordinationsdaten für einen geordneten, synchronen Netzwerkbetrieb zusendet, so dass sich die Schreib-/Lesestationen nicht störend beeinflussen unter Verwendung einer Anzahl Zeitschlitze und einer Anzahl Frequenzkanäle, wobei ein Servicefrequenzkanal (Reader Service Kanal, RSK) und/oder ein Servicezeitschlitz (Reader Service Time, RST) bereit stehen, die zu Servicezwecken mit der Sammelstation von den Schreib-/Lesestationen genutzt werden.

Das Verfahren benutzt dabei mit Vorteil das in der Anmeldung WO2006/037239 offenbarte Reader Service Signal (RSSignal) als Kommunikationsmittel direkt auf dem Physical Air Interface zwischen den Schreib-/Lesestationen.

Mit Vorteil wird eine Schreib-/Lesestation mit einer Aufgabe eines Masters betreut, der als Parent bezeichnet wird, der mit allen sternförmig mit ihm verbundenen Schreib-/Lesestationen, die als Children (Child) bezeichnet werden, mindestens eine definierte Funkverbindung unterhält. Zwecks Synchronisation erhalten die Children von ihrer Sammelstation eine Sequenz auf dem Reader Service Signal, wobei die Children entweder für die Dauer des Servicezeitschlitzes (Reader Service Time, RST) in den Servicefrequenzkanal (Reader Service Kanal, RSK) wechseln, oder die Children während des Servicezeitschlitzes (Reader Service Time, RST) auf ihrem Betriebsfrequenzkanal bleiben und die Sammelstation alle verfügbaren Frequenzkanäle mit der Sequenz beschickt, oder dass die Children zwecks Synchronisation vom Parent eine Sequenz auf dem Reader Service Signal erhalten, wobei die Children nach einem Schreib-/Lesevorgang von einem Betriebsfrequenzkanal in den Servicefrequenzkanal (Reader Service Kanal, RSK) wechseln.

In Neztwerken, in denen ein Child oder mehrer Children keine ausreichende Funkverbindung mit dem Master unterhalten kann, bzw. können, wird vorteilhaft ein mit dem Master in Verbindung stehendes Child mit einer Aufgabe eines Assistenten betreut ist, der sowohl eine Verbindug zum Master, als auch eine Verbindung zu dem, bzw. den Master fernen Child, bzw. Children hat, wobei der Assistent diese für den Master unerreichbaren Schreib-/Lesestationen entsprechend mit Strukturdaten und Koordinationsdaten vom Master bewirtschaftet.

Hervorzuheben ist ferner, dass neben der Zusendung der Sequenz vom Master bzw. Assistenten zum Child, dieses eine Meldung an seinen Master bzw. Assistenten absetzen kann und der Master bzw. Assistent eine Antwortmeldung übermitteln kann, zwecks Anpassung der Strukturdaten und/oder der Koordinationsdaten.

Bei Dringlichkeit kann ein Child, um eine rasch verfügbare oder zusätzliche Ressource zu erhalten, ein Frequenzkanal/Zeitschlitz-Paar innerhalb des RST/RSK von seinem Parent anfordern wobei dann nötigenfalls ein anderes Child vom Parent veranlasst wird, dieses Paar im nächsten Durchgang nicht zu benutzen.

Auf vorteilhafte Weise kann eine weitere Schreib-/Lesestation nachträglich ins Netzwerk gebracht werden oder sich mobil durch das Netzwerk bewegen; diese in den laufenden Netzbetrieb eingebrachte Schreib-/Lesestation synchronisiert durch Abhören des RSK mit dem bestehenden Netzwerk und erhält die notwendigen Strukturdaten und Koordinationsdaten, um sich im nächsten RST anzumelden und vom zuständigen Master oder Assistenten ein Frequenz/Zeitschlitz-Datenpaar zu erhalten.

Auch Fehler oder Störungen des Netzbetriebs können nun erkannt und beseitigt werden. So wartet eine Schreib-/Lesestation, welche Störungen in den Frequenzkanälen feststellt, verursacht durch eine andere arbeitende Schreib-/Lesestation oder dritte Funksysteme, auf die nächste Möglichkeit zur Re-Synchronisation mit dem Parent, synchronisiert sich neu und im Falle fortgesetzter Störung teilt sie dies dem Parent mit und erhält ein Ersatzpaar Frequenzen/Zeitschlitz.

Von besonderem Vorteil ist, wenn die eine Sammelstation entweder eine Reader Service Terminal und/oder eine ausgewählte Schreib-/Lesestation ist, das oder die mit einerm Sever verbunden sein können und gegebenenfalls keine Schreib-Lesevorgänge vollzieht, bzw. vollziehen. In dem Fall, dass ein Frequenz-agiles Verfahren durchführt wird, wechseln die Frequenzkanäle auf Grund von Datenaustausch zwischen Parent und Children vorzugsweise synchron mit den Zeitschlitzen RST und für die betroffenen Schreib-/Lesestationen zeitgleich. Des Weitern kann mit Vorteil ein Frequenzsprung-Verfahren durchführt werden, wobei die Wechsel der Frequenzkanäle auf Grund von einer Anzahl den Schreib-/Lesestationen bekannten pseudozufälligen Mustern abläuft, vorzugsweise synchron mit den Servicezeitschlitzen und für die betroffenen Schreib-/Lesestationen zeitgleich erfolgt und die Wahl der Abfolge der Frequenzsprünge so gewählt wurde, dass ein jeweils kollisionsfreier Schreib-/Lesebetrieb sichergestellt ist.

### Kurze Beschreibung der Zeichnung

Im Folgenden wird die Erfindung anhand von Figuren beispielhaft erläutert. Gleiche Gegenstände sind in den Figuren grundsätzlich mit gleichen Bezugszeichen gekennzeichnet. Es zeigen rein schematisch die
- Fig. 1: einen Ausschnitt eines RFID-Netzwerks, umfassend eine Anzahl Etiketten und eine Anzahl Schreib-/Lesestationen;
- Fig. 2: ein weiteres, komplexeres Beispiel einer RFID-Netzwerktopologie;
- Fig. 3a: ein Koordinationsplan gemäss dem erfindungsgemässen Verfahren
- Fig.3b: einen weiteren Koordinationsplan gemäss dem erfindungsgemässen Verfahren für ein sternförmiges RFID Netzwerk mit Frequency Hopping;
- Fig. 4: einen weiteren erfindungsgemässen Koordinationsplan für ein RFID-Netzwerk, umfassend einem Cluster mit einem Master und einem Assistenten, und
- Fig. 5: zeigt wiederum einen Koordinationsplan für das RFID-Netzwerk nach Fig. 2 mit Freuquency Hopping Betrieb.

### Wege zur Ausführung der Erfindung:

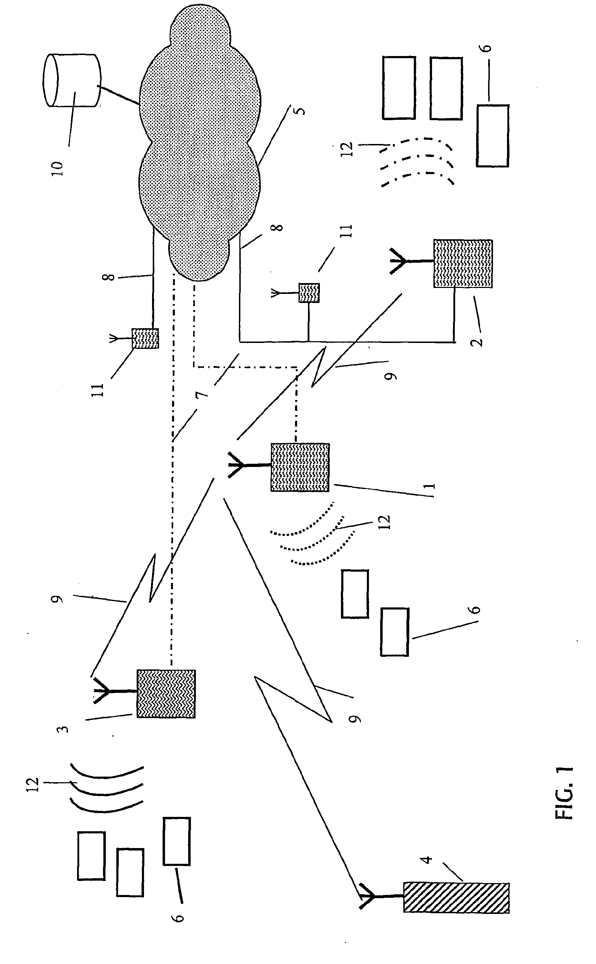

In Fig. 1 ist mit 1, 2, 3, 11 eine Anzahl RFID-Schreib-/Lesestationen bezeichnet, die untereinander über das Physical Air Interface mittels einem Reader Service Signal 9 kommunizieren (Reader Service Signal 9 ist für die Schreib-/Lesestationen 11 der Übersichtlichkeit wegen nicht eingezeichnet). Die Schreib-/Lesestationen 1 und 3 sind über eine WLAN-Verbindung 7 mit einem Intranet 5 verbunden, die Schreib-/Lesestationen 2, 11 weisen eine Kabelverbindung 8 zum Intranet 5 auf. Über das Intranet 5 weisen sämtliche Schreib-/Lesestationen 1, 2, 3, 11 einen Zugang zum Server 10 auf. Mittels einer Funkverbindung unterhalten die Schreib-/Lesestationen 1, 2, 3, 11 mit elektronischen Etiketten 6 eine Wirkverbindung 12 zur Durchführung von Schreib- /Lesevorgängen. Ein Reader Service Terminal 4 (RSTerminal 4) ist für die Inbetriebnahme eines RFID-Netzwerks über das Physical Air Interface mit den Schreib-/Lesestationen 1, 2, 3, 11 verbunden.

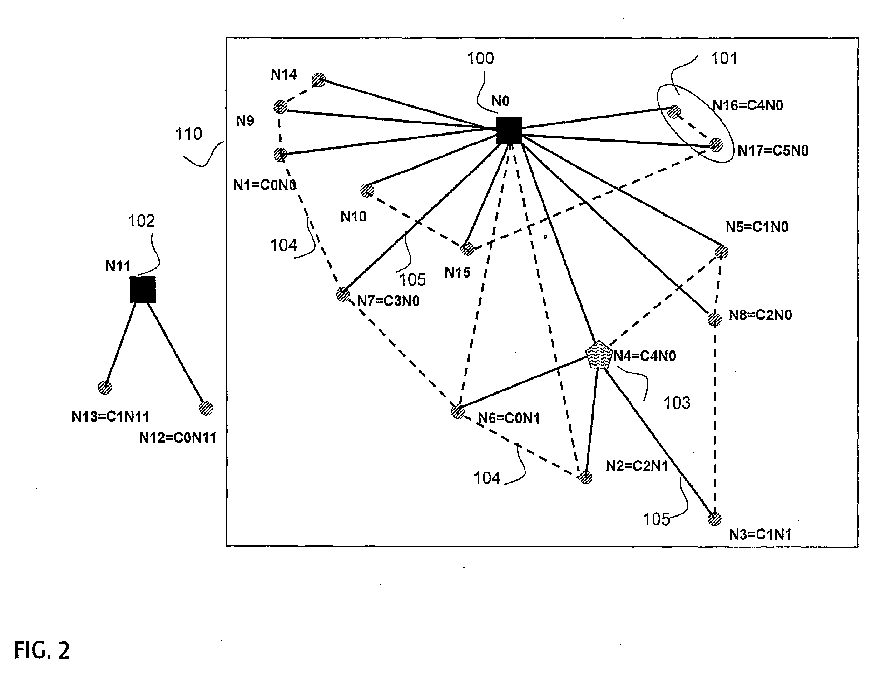

Figur 2 zeigt ein Beispiel einer Topologie, wie sie sich für 18 Knoten - den Schreib-/Lesestationen N0 bis N17- darstellt. In diesem Netzwerk ist eine Schreib-/Lesestation N0 während der Inbetriebnahme zum Master 100 bestimmt worden, da diese Schreib-/Lesestation N0 die grösste Anzahl benachbarte Schreib-/Lesestationen, den Knoten N1, N4, N5, N7, N8, N9, N10, N14, N15, N16, N17 direkt über das Physical Air Interface erreicht Die Schreib-/Lesestation N0 ist zugleich Parent von 11 Knoten, den so genannten Children CxN0, mit x gleich 1 bis 11, wobei der Knoten N4, bzw. die Schreib-/Lesestation N4, auch ein Assistent 103 des Masters 100 ist. Die Schreib-/Lesestation N4 versorgt die Knoten bzw. Children N2, N3 und N6, welche bei der Nachbarschaftssuche den Knoten N0 nicht stark genug empfangen konnten (fehlende direkte oder zu schwache Verbindung 105 des Reader Service Signals). Die Knoten, bzw. die Schreib-/Lesestationen N11, N12 und N13 sind isoliert vom Netzwerk (keine gestrichelten Verbindungen 104 und keine direkte Verbindung 105 des Reader Service Signals) und bilden daher ein eigenes Netzwerk mit Masters 102 (z.B. abgetrennte Kammer, andere Stockwerke...), welchem dieselben Ressourcen an Zeitschlitzen und Frequenzkanälen offen stehen, wie dem Netzwerk mit Master 100. Die Schreib-Lesestationen N16 und N17 bilden eine kooperative Gruppe 101, sie benutzen daher zur selben Zeit dieselbe Frequenz.

Die Erfindung benutzt RFID-Schreib-/Lesestationen, welche über eine grössere Distanz passive oder semiaktive Etiketten beschreiben oder lesen können, indem sie den Etiketten Energie liefern aus einem Leseträgersignal und einer RF-Frequenz, welche für das Rücksenden von Daten von den Etiketten zu den Schreib-/Lesestationen benötigt wird. In grossen RFID-Anlagen, insbesondere bei der Nutzung von RF-Frequenzen im UHF oder SHF Bereich, haben die Schreib-/Lesegeräte selber eine sehr hohe Reichweite von bis zu mehreren Hundert Metern. Mit einer Ausgangsleistung von + 36 dBm und einer geforderten Empfindlichkeit für Etiketten-Antwortsignale von -84 dBm ergibt sich eine Dynamik von 120 dB. Schreib-/Lesestationen im Abstand von über 100 m stören also den Lesevorgang anderer Schreib-/Lesestationen noch beträchtlich, selbst ohne Sichtverbindung. In der vorliegenden Erfindung geht es darum, diese Störungen gegenseitig minimal zu halten und ein Maximum an Schreib-/Lesestationen parallel nach einem Fahrplan arbeiten zu lassen; hierfür ist es nötig, ein solch komplexes System geordnet in Betrieb setzen zu können.

Alle Schreib-/Lesestationen selber sind nach dem bekannten Prinzip "Software Defined Radio" (SDR) aufgebaut, was ihnen ein hohes Mass an Flexibilität im Betrieb verleiht. So können einfach verschiedene Modulationen per Software erzeugt und variiert werden, Frequenzen in weniger als einer Millisekunden gewechselt werden und problemlos mehrere Empfänger im Basisband als mehrfach instanzierte Software-Routine realisiert werden. Breitbandige SDR können sogar mehrere Empfangskanäle parallel bearbeiten, ohne grösseren Hardware-Aufwand oder relevanten Mehrpreis zu verursachen.

Die folgende Beschreibung ist entsprechend den drei Verfahren zur Inbetriebnahme (Installations-Mode) eines RFID-Netzwerkes, zur Koordination bzw. Konfiguration und zum Netzwerkbetrieb (Operations-Mode) gegliedert.

### A. Verfahren zur Inbetriebnahme eines RFID-Netzwerks (Installation)

Wie in Fig. 2 dargestellt, sind die Schreib-/Lesestationen N0 bis N17 am Einsatzort platziert und in einen Inbetriebnahme-Modus (Installations-Modus) versetzt. Alle internen Uhren in den Schreib-/Lesestationen N0 bis N17 sind bis auf einige Sekunden genau voreingestellt. Jede Schreib-/Lesestation N0 bis N17 sendet mehrmals ein virtuelles Lesesignal, welches das Reader Service Signal 105 (RSSignal 105) mit der Schreib-/Lesestation Identifikation enthält (z.B. AM-Signal mit Bruchteil oder voller Trägerleistung und 10%...100% Modulationsindex), ab einem vorgegebenen Zeitpunkt, welcher der Zeit entspricht, zu der die örtliche Platzierung aller Schreib-/Lesestationen abgeschlossen ist. Die Schreib-/Lesestationen N0 bis N 17 erstellen eine Nachbarschaftstabelle unter Verwendung der Empfangssignal-Pegelmessung des Seitenbandes des RSSignal 105, Das RSSignal 105 wird in jeder Schreib-/Lesestation N0 bis N17 jeweils vorteilhaft nach einer pseudozufälligen Zeit aktiviert, um wiederholte Kollisionen zu vermeiden. Das RSSignal 105 ist zeitlich kurz gestaltet und enthält im Wesentlichen nur die Adresse jeder Schreib-/Lesestation N0 bis N 17 aufmoduliert zwecks Identifikation, sowie Synchronisationshilfen für die anderen, benachbarten Empfänger der Schreib-/Lesestationen N0 bis N17. Die Empfänger der Schreib-/Lesestationen N0 bis N17 sind immer eingeschaltet, um keine Aussendung einer benachbarten Schreib-/Lesestationen N0 bis N 17 zu verpassen.

Nach einer bestimmten Zeit sind die Nachbarschaftstabellen, versehen mit den Adressen und den Empfangspegeln der Schreib-/Lesestationen N0 bis N17 erstellt, und die Daten werden mit Hilfe des RSSignals 105 eingesammelt. Als Sammelstation dient hier beispielsweise eine Schreib-/Lesestation (1, 2, 3, 11, NO-N17) oder ein Reader Service Terminal 4.

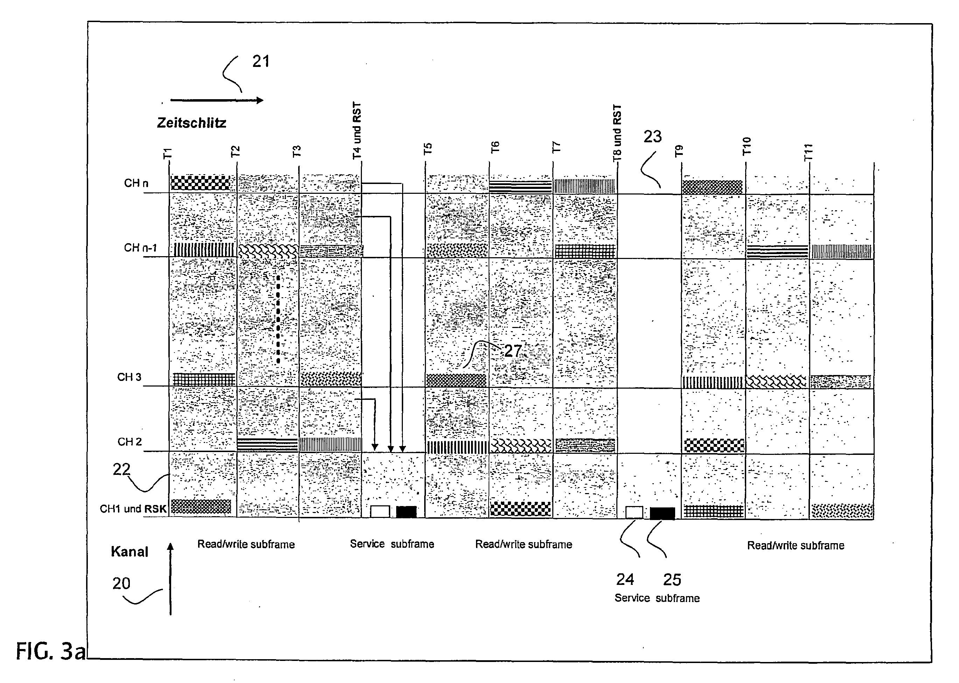

In einem Planungsalgorithmus werden nun die Ressourcen für jede Schreib-/Lesestation N0 bis N17 des RFID-Netzwerks berechnet. Unter Ressourcen versteht man das Einteilen verfügbarer Zeitschlitze 21, 31, 41 in den Fig. 3a, b, Fig. 4 und Fig. 5 und Frequenzkanäle 20, 30, 40 in den Fig. 3a, b, Fig. 4 und Fig. 5 für jede Schreib-/Lesestationen N0 bis N17, sowie die Erstellung einer Netzwerktopologie, welche für den wohlgeordneten, effizienten Datenaustausch mit Hilfe des RSSignals 105 dient. Die Frequenzkanäle 20, 30, 40 sind durch länderspezifische Vorgaben geregelt (z.B. ETSI, FCC). Die Zeitschlitze 21, 31, 41 sind ebenfalls in ihrer maximalen Dauer durch Vorgaben beschränkt und in der minimalen Dauer durch einen Leseprozess einer elektronischen Etikette (nur in Fig. 1 gezeigt) nach einem bestimmten Protokoll. Ferner kann jeder Schreib-/Lesestationen N0 bis N17 ein Dringlichkeitsfaktor zugeordnet werden, entsprechend ihrer Rolle in einem Identifikationsprozess. Dieser Faktor geht bei der Bestimmung des Fahrplans für die Zeit-/Frequenz-Slots mit ein, zusammen mit der Störgrösse, die sich aus den Signalstärken der Nachbarschaftssuche ergibt. Die anzuwendende Netzwerktopologie ist vorzugsweise einfach sternförmig, wobei die Schreib-/Lesestation N0 mit den meisten Nachbarn zum Master 100 wird. Der Master 100 unterhält aktive Verbindungen über das RSSignal 105 zu seinen Nachbarn N1, N4, N5, N7, N8, N9, N10, N14, N15, N16, N17. Nicht aktive, aber störende Verbindungen 104 sind in Fig. 2 gestrichelt eingetragen.

Eine weitere geeignete Topologie ist eine Clusterform. Sie bietet sich besonders dann an, wenn es keine Schreib-/Lesestationen N0 bis N17 gibt, die alle benachbarten Schreib-/Lesestationen genügend gut hören kann. In solchen Netzwerken wird mit Parent und Child Beziehungen gearbeitet. Der Master 100 kommuniziert in der Folge über eines seiner Children, nämlich Child N4, welches somit zum Assistent 103 wird, mit der entfernten Gruppe N2, N3, N6. In einem dritten Fall entsteht ein komplett isolierter Teilzweig, der keine benachbarte Schreib-/Lesestationen hört. Dieser Fall ist trivial, die Gruppe, umfassend die Schreib-/Lesestationen N11, N12, N13, kann unabhängig vom Rest mit einem eigenen Master 102 betrieben werden. Andere Topologien sind durch weitere Aufgliederung der der Erfindung zu Grunde liegenden Ideen mit eingeschlossen.

Anschliessend werden die Schreib-/Lesestationen N0 bis N17 in einen Koordinations-Modus, bzw. Konfigurations-Modus gebracht, innerhalb dem die Netzwerkinformationen (Fahrplan) in die Schreib-/Lesestationen N0 bis N17 programmiert werden. Dies geschieht alternativ entweder über ein Backbone-Netzwerk (in Fig. 1 umfassend:
Leitungsverbindungen 8, WLAN-Verbindungen 7, Intranet 5, Server 10) oder das RSTerminal 4 in Fig. 1 oder in Fig. 2 mit Hilfe des Masters 100 (bzw. Master 102) über das RSSignal 9, Zu einem definierten Zeitpunkt beginnt schliesslich das ganze Netzwerk die normale operative Phase im Operations-Modus, bzw. den Netzbetrieb:
   1) Jede Schreib-/Lesestation N0 bis N17 kennt ihren Frequenzkanal, bzw. im Falle von Frequency Hopping den Startkanal und die Hopping-Sequenz.
   2) Jede Schreib-/Lesestation N0 bis N17 kennt die Startzeit und die Zeitdauer ihrer Leseoperation.
   3) Jede Schreib-/Lesestation N0 bis N17 kennt ihre Rolle als Master, Assistent, Parent oder Child und die Adressen ihrer direkten Gegenstellen (Parent/Child - Child/Parent)

Im Operations-Modus, bzw. im Netzbetrieb können verschiedene Adaptionen an Stationen und im Netzwerk nun vorteilhaft und sicher durchgeführt werden.

Eine alternative Möglichkeit für die Inbetriebnahme eines RFID-Netzwerkes erfolgt nach Fig. 1 mit Hilfe eines Reader Service Terminal 4 (RSTerminal). Das RSTerminal 4 ist ein Gerät zur Unterstützung der Inbetriebnahme (Installation), welches vorzugsweise drahtlos über das RSSignal 9 mit jeder Schreib-/Lesestation 1, 2, 3, 11 Kontakt aufnimmt und deren Betriebsart und Betriebsparameter einstellen kann. Zu Beginn der Inbetriebnahme wird jede Schreib-/Lesestation 1, 2, 3, 11 durch das RSTerminal 4 in einen Installationsmodus versetzt. In diesem Modus führt jede Schreib-/Lesestation des zukünftigen RFID-Netzwerks eine erfindungsgemässe Nachbarschaftssuche durch. Jede Schreib-/Lesestation 1, 2, 3, 11 ermittelt hierbei durch zufälliges kurzes Aussenden des RSSignals 9 auf dem Physical Air Interface und durch fortwährendes Empfangen in der übrigen Zeit auf einer oder mehreren Frequenzen die Empfangssignalstärke und Identifikation aller übrigen, potentiell interferierenden Schreib-/Lesestation 1, 2, 3, 11 und legt diese Daten in einer Nachbarschaftstabelle ab. Nach einer gewissen Beobachtungsdauer werden die ermittelten Tabellen über das Backbone-Netzwerk 5 oder wiederum alternativ über das RSTerminal 4 eingesammelt. Aus diesen Daten werden die RFID-Netzwerkstruktur (Topologie, Adressen, ...) und Einsatztabellen, bzw. Fahrplan (Frequenzkanäle, Zeitschlitze,...) für jede Schreib-/Lesestation 1, 2, 3, 11 im Offline-Verfahren berechnet. Server 10, Master 1 oder alternativ das RSTerminal 4 erhalten die zu installierende Netzwerktopologie aus der Berechnung eingegeben, so dass sie an die Schreib-/Lesestation 1, 2, 3, 11 verteilt werden können, im Falle des RSTerminals 4 oder des Masters 1 über das RSSignal 9. Jede Schreib-/Lesestation 1, 2, 3, 11 erhält nun über das Backbone-Netzwerk 5 oder vom RSTerminal 4 die für seinen Betrieb notwendigen Daten über Zeitschlitze, Frequenzkanäle und Frequency Hopping Sequenz aus der vom RSTerminal 4 oder Master 1 gesendeten Tabelle.

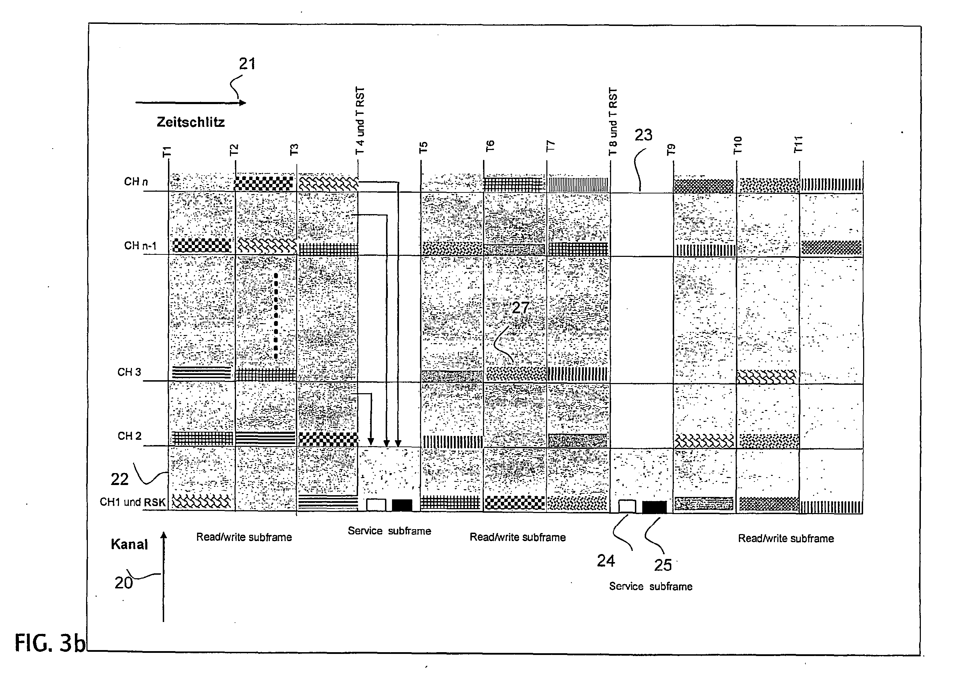

Im Netzbetrieb des RFID-Netzwerks verfahren die einzelnen Schreib-/Lesestationen nach folgenden Prinzipien. Jede Schreib-/Lesestation benutzt ausschliesslich nur die ihr zugeteilten Frequenzkanäle zu den ihr zugeteilten Zeitschlitzen. Die Stationen synchronisieren und informieren sich über den Fahrplan periodisch auf einer ausgezeichneten Schreib-/Lesestation, dem Master 1, in einem in Frequenz und Zeit definierten Raum, bestimmt durch einen Reader Service Kanal RSK und einer Reader Service Time RST gemäss Fig. 3a, b. Die Schreib-/Lesestationen 2, 3, 11 und der Master haben im Synchronisationsintervall auch die Möglichkeit, Daten auszutauschen zwecks Adaption des Netzwerkbetriebes an die aktuelle Situation.

Es wird somit aus der ursprünglichen Problemstellung der Überreichweite von Schreib-/Lesestationen in einem RFID-Netzwerk zu letzt in den Vorteil des geordneten Betriebs nach Fahrplan geschaffen, indem erfindungsgemäss folgendes ausgenutzt wird:
1. Die sich über einen grossen Bereich gegenseitig hörenden Schreib-/Lesestationen können untereinander, wenn nötig, identifizieren und kommunizieren. Dies bestimmt die Netzwerkstruktur.
2. Die sich über einen grossen Bereich gegenseitig hörenden Schreib-/Lesestationen sollen im Schreib-/Lesebetrieb so in Frequenz und Zeit betrieben werden, dass sie sich nicht gegenseitig stören. Dies bestimmt die Fahrpläne der Netzwerkteilnehmer.

### B. Reader Service Kanal (RSK) und die Reader Service Time (RST)

Die beiden erfindungsgemässen Ressourcen Reader Service Kanal RSK und Reader Service Time RST steuern den Betrieb des RFID-Netzwerks und haben als Mittel zur Steuerung das RSSignal 9, 105 auf dem Physical Air Interface. Das RSSignal 9, 105 enthält als Grundelemente Zeitinformationen zur Synchronisation des Netzwerks, sowie Identifikation der sendenden Schreib-/Lesestationen und Angaben zu ihrer Parent-Child-Beziehung. Es wird kein Backbone-Netzwerk (WLAN, Bus) zwingend benötigt.

Jede Schreib-/Lesestation hat ihren zugeteilt Frequenzkanal bzw. ihre zugeteilten Frequenzkanäle, einen Zeitschlitz oder mehrere Zeitschlitze (Slots) oder Frequency Hopping Sequenzen, sowie die genaue Systemzeit im Konfigurationsmode über das RSSignal 9 erhalten. Die Schreib-/Lesestationen führen entsprechend ihre Schreib- /Leseaufträge aus. Zwischenzeitlich wechseln sie die Frequenzen zu einer wohl bestimmten Zeit, der Reader Service Time RST, auf den Reader Service Kanal RSK, oder unterbrechen zumindest ihren Schreib-/Leseprozess. Die Schreib-/Lesestationen haben dadurch die Möglichkeit Informationen via Parents auszutauschen und die innere Uhrzeit (Bittakt) exakt zu synchronisieren, z.B. für das synchrone Frequency Hopping oder kooperative Betriebsarten mehrerer Schreib-/Lesestationen. Die speziell gekennzeichnete Schreib-/Lesestation, Master 100 genannt, bestehend aus derselben Hardware aber funktionell verschiedener Software übernimmt das Aussenden der Zeitmarke und das Austauschen von Informationen.

Typische Zeiten für ein ausgeführtes Beispiel betragen für einen Lesezeitschlitz 1 Sekunde für einen RST Zeitschlitz 100 ms und für eine Frequency Hopping Wechsel < 10 ms.

Frequency Hopping ist in einigen RFID Bändern und Ländern regulatorisch bei voller Sendeleistung obligatorisch. Manchmal ist es jedoch für das System einfacher den RSK nicht im Frequency Hopping zu betreiben. Die Funkvorschriften erlauben meist einen Betrieb auf einem festen Frequenzkanal mit weniger Leistung. In diesem Fall verzichtet man einfach auf das Schreiben/Lesen von elektronischen Etiketten für den Master und nutzt ihn lediglich als Netzwerk-Steuereinheit. Die verringerte Leistung ist immer noch weit genügend gross zur Sicherung der Datenübertragung zwischen den Schreib-/Lesestationen mit dem RSSignal.

Es gibt viele mögliche Anordnungen von RSK und RST, welche je nach Netzwerktopologie mehr oder weniger effizient sind. Drei grundlegende bevorzugte Ausführungsbeispiele sollen das Prinzip verdeutlichen und Wege der Erfindung aufzeigen.

### 1. Modell " low data exchange/ small network size"

Fig. 3a zeigt eine bevorzugte Variante mit einem einfachen sternförmigen Netzwerk (Fig.2 rechter oberer Teil ohne N4 Zweig) mit n Frequenzkanälen 20 und m Zeitschlitzen (Slots) 21, mit n, m = 1, 2, 3, ..., nach welchen ein Zeitschlitz 23 für die RFID-Netzwerk-Steuerung eingeschoben ist, der RST. Die Kommunikation mit Hilfe des Reader Service Signals findet im Frequenzkanal RSK 22 statt. Aus der grossen Vielfalt an Möglichkeiten zur Wahl von Verweildauer auf einem Frequenzkanal, Schreib-/Lesedauer eines zusammenhängenden Vorgangs und dem Intervall zwischen den Besuchen des RSK zu den Zeiten RST, wurden zwei Varianten beispielhaft ausgewählt. Jede andere Kombination von Zeitschlitzen, Schreib-/Lesedauern und RSK Besuchhäufigkeit sind sinngemäss mit eingeschlossen. Ganzzahlige Verhältnisse der Zeiten vereinfachen den Prozess. Die RST Besuchsdauer in Zeitschlitz 23 im RSK 22 sollte aber so kurz wie möglich ausgestaltet werden, um das Netzwerk effizient zu betreiben (z.B. 100 ms). In Fig. 3a wurde die Annahme getroffen, das Frequency Hopping Intervall sei gleich gross wie ein Schreib-/Leseintervall (z.B. 200 ms) aber kleiner als ein RST Besuchintervall (z.B. 800 ms). In Fig. 3b hingegen wurde die Annahme getroffen, das Frequency Hopping Intervall sei kleiner (z.B. 400 ms) als ein Schreib-/Leseintervall (z.B. 1.2 s) und das Schreib-/Leseintervall entspreche gerade der Zeit zwischen den RSK Besuchen.

Im Netzwerk kann aber auch ein sehr langsames Frequency Hopping stattfinden, welches beispielhaft nach drei Slots einen synchronen Kanalwechsel gerade im Anschluss an den Besuch des RSK für alle Schreib-/Lesestationen vorsieht (nicht in einer Figur dargestellt). Des Weiteren können einzelne Zeitschlitze durchaus nach einem RSK/RST Update auch in einer vom Master neugeordneten Reihenfolge belegt werden, wo dies sinnvoll ist (siehe z.B. Abschnitt Reservation eines Schreib-/Lesefensters). Die dazu notwendige Kommunikation findet nebst der erwähnten Synchronisation in so genannten Service Subframes 24 und 25 statt mit Hilfe eines geeigneten, bekannten Request/Answer Verfahren zwischen Parent und Child.

Der RSK wurde auf einen Kanal (hier Kanal 1/RSK 22) für alle Schreib-/Lesestationen festgelegt, damit sich auf einfache Art alle Schreib-/Lesestationen periodisch wieder treffen. Der Kanal CH1/RSK 22 steht bis auf den Zeitschlitz RST 23 auch für Schreib-/Lesezyklen zur Verfügung.

Der RSK 22 zur Zeit RST 23 gehört immer dem Master 100 zur Steuerung. Der Master kann selber auch Schreib-/Lesevorgänge ausführen. Die schnellen Frequenzwechselzeiten moderner Schreib-/Lesestationen in SDR-Technik erlauben einen raschen Wechsel in den RSK. Der Service Frequenz-/Zeitschlitz RSK 22 / RST 23 kann selber durchaus auch ein Frequency Hopping durchführen, wobei dann die Schreib-/Lesestationen diese Sequenz auch kennen müssen, bzw. ihre Hopping Sequenzen relativ zur RSK Hopping Sequenz in ihren Ablauftabellen abgelegt sein muss. Alternativ kann der Master den nächsten RSK und ebenso auch das nächste RST im momentanen Datenaustausch mit den Schreib-/Lesestationen über das RSSignal bekannt geben (adaptives Verhalten).

In grösseren, komplexeren RFID Netzwerken können sich ein Master 100 und mehrere Assistenten 103 befinden. Diese könnten sich die Zeitschlitze RST 23 auf dem Kanal CH1/RSK 22 teilen oder alternierend benutzen. Dadurch ist ein problemloser Austausch auch zwischen Assistenten 103 und seinen Children möglich. Dual dazu können vorteilhaft auch mehrere weitere Kanäle CHx/RSK im Zeitschlitz RST 23 als Teilung für die Steuerung des Masters und seiner Children, sowie der Assistent 103 und seiner Children verwendet werden. Die entsprechenden Slots (z.B. CH3 zur Zeit T4/RST) in Fig. 3a sind ja noch frei. Zusätzlich muss dann aber den Assistent 103 ein weiterer Zeitschlitz RST zugestanden werden, damit er sich ebenfalls mit seinem Parent, dem Master 100, austauschen kann, oder es werden aufeinander folgende RST alternierend benutzt. Diese Dualität zwischen RSK und RST bietet fast immer eine mögliche weitere Lösung des Problems.

Gegen ein Frequency Hopping des RSK spricht neben der komplizierteren Verwaltung des RSK für die übrigen Schreib-/Lesestationen auch die Tatsache, dass ausser Tritt geratene Schreib-/Lesestationen schwerer zur Synchronität zurück finden. In Fig. 3a, b bezeichnen gleiche Farbe/Schraffuren die jeweils gleichen Schreib-/Lesestationen.

In den RST Zeitschlitzen 23 werden mindestens die Synchronisationen nachgeführt. Dies geschieht durch eine Auswertung der Bitflanken oder zeitlicher Lage von Präambeln, zum Beispiel durch Aussenden einer so genannten m-Sequenz auf dem RSSignal des Masters 100 (oder Assistenten 103) und der Übertragung der codierten Uhrzeit. Jede empfangende Schreib-/Lesestation kann die ihr auch bekannte m-Sequenz lokal erzeugen und durch Korrelation den Zeitunterschied zum Master ermitteln und nachjustieren. Dieses Verfahren ist beispielsweise von der GPS Navigation her bestens bekannt. Des Weiteren können Informationen betreffend Änderungen im Netzwerkbetrieb übermittelt werden (weisse Blöcke 24 im RSK 22 zur Zeit RST 23). Die Schreib-/Lesestationen haben zudem die Möglichkeit, schwarzer Block 25, ihrerseits Meldungen an den Master zu übermitteln. Hierzu wird z.B. ein bekanntes Carrier Sense, Collision Avoidance Verfahren benutzt, da in der Regel keine oder nur wenige Schreib-/Lesestationen etwas zu übertragen haben. Die RST liesse sich aber auch einfach in bekannter Weise in weitere Zeitschlitze unterteilen, welche einen TDMA Zugriff für jede Schreib-/Lesestation bereitstellen, um die typischerweise geringe Datenmenge von und zu den Schreib-/Lesestationen zu übertragen.

Die Anzahl Frequenzkanäle richtet sich nach den regulatorischen Vorschriften für RFID-Funksysteme. Die Abweichung des Timings einer Schreib-/Lesestation nach 10 Sekunden beträgt bei heutiger Technologie von Quarzen weniger als 100 Mikrosekunden. Bei einer Datenrate von 10 kBit/s auf dem RSSignal kann auf etwa 10 Mikrosekunden genau synchronisiert werden, mit einer m-Sequenz von beispielsweise 31 Bit Länge.

### 2. Model "medium data exchange/ medium network size"

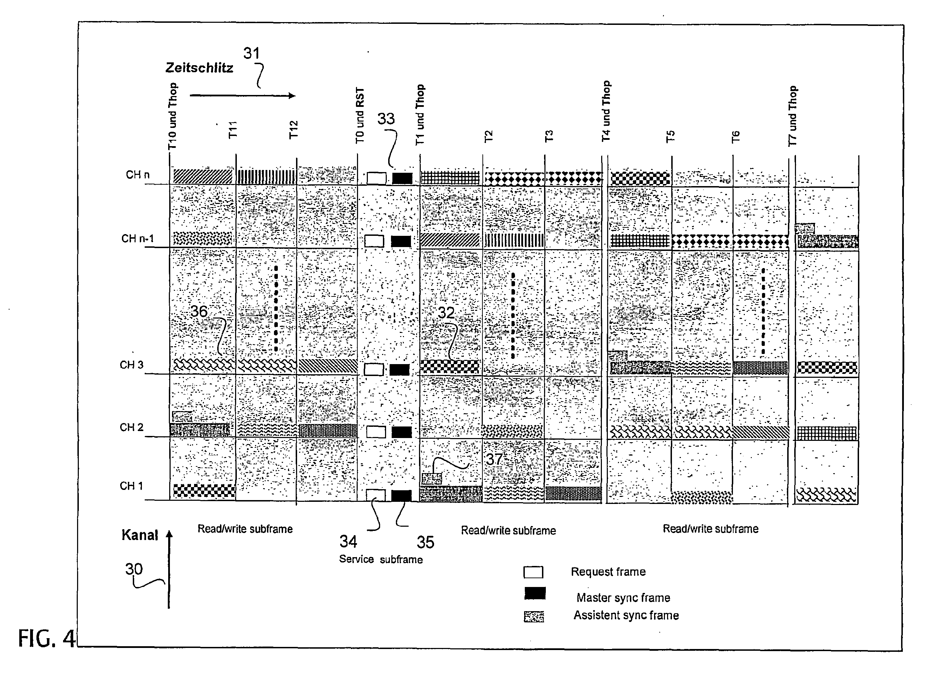

Figur 4 zeigt eine andere Lösung, welche auf einen festen Reader Service Kanal RSK verzichtet. Alle Frequenzkanäle werden für den Lesevorgang benutzt. Bei der Netzwerktopologie handelt es sich um ein Cluster mit einem Master 100 und einem Assistent 103 Schreib-/Lesestation (Fig. 2). Die Schreib-/Lesestationen führen wiederum ein Frequency Hopping oder eine intelligentere Form von Frequency Agility durch. Für den Austausch von Service Daten wird kein Frequenzwechsel für die Schreib-/Lesestationen benötigt. Eine solche Lösung hat Vorteile in Systemen mit Schreib-/Lesestationen, welche nur über einfach gestaltete Frequenzsynthesizer verfügen, welche die Frequenz nicht sehr rasch wechseln können (zum Beispiel in kostengünstigen Handheld Stationen). Der Austausch wird erreicht in dem der Master 100 in einem RST Zeitschlitz 33 alle Kanäle sequentiell durcheilt und jeweils das Synchronisationssignal übermittelt. Das Verfahren hat den Vorteil, dass nur der Master 100 und Assistent 103 schnell sein müssen im Frequenzwechseln und eignet sich auch dann besonders, wenn praktisch nur die Synchronisation und wenige Änderungsdaten zu übertragen sind. Eine andere bevorzugte Variante dieser Spielart ist dann vorteilhaft, wenn alle Schreib-/Lesestationen auf festen Frequenzen arbeiten, anstatt ein Frequency Hopping durchzuführen. Eine wiederum andere Variante ist es, wenn ein komplex aufgebauter Master eingesetzt wird, der alle Frequenzkanäle kontinuierlich, eventuell sogar mit mehreren parallel arbeitenden Sende-Empfängern überwacht und daraus eine dynamische Zuteilung der Kanäle an die Schreib-/Lesestationen vornimmt auf Grund der beobachteten Aktivitäten (Frequency Agile Systems).

Die beiden Schreib-/Lesestationen in Kanal CH2 im ersten Slot T11 und T12 sind Children von der Schreib-/Lesestation im Kanal CH2/ Slot T10 und hören den Master 100 mit zu schlechter Signalqualität, um eine sichere Synchronisation zu gewährleisten. Da der Clusterzweig sehr klein ist, überträgt der Assistent 103 im Kanal CH2/ Slot T10 die Synchronisationsdaten während seinem Lesevorgang auf dem RSSignal. Die Gruppe bleibt auch nach einem Frequency Hop zusammen immer im jeweils gleichen Kanal (Beispiel in Fig. 4: CH1 vonT1 bis T3 und CH3 von T4 bis T6) und kann so einfach gesteuert werden.

Alle im 1. Modell beschriebenen Aussagen zur Aktivität während dem RST 33 sind in diesem Modell ebenfalls sinngemäss anwendbar.

### 3. Model " high data exchange/ big network size"

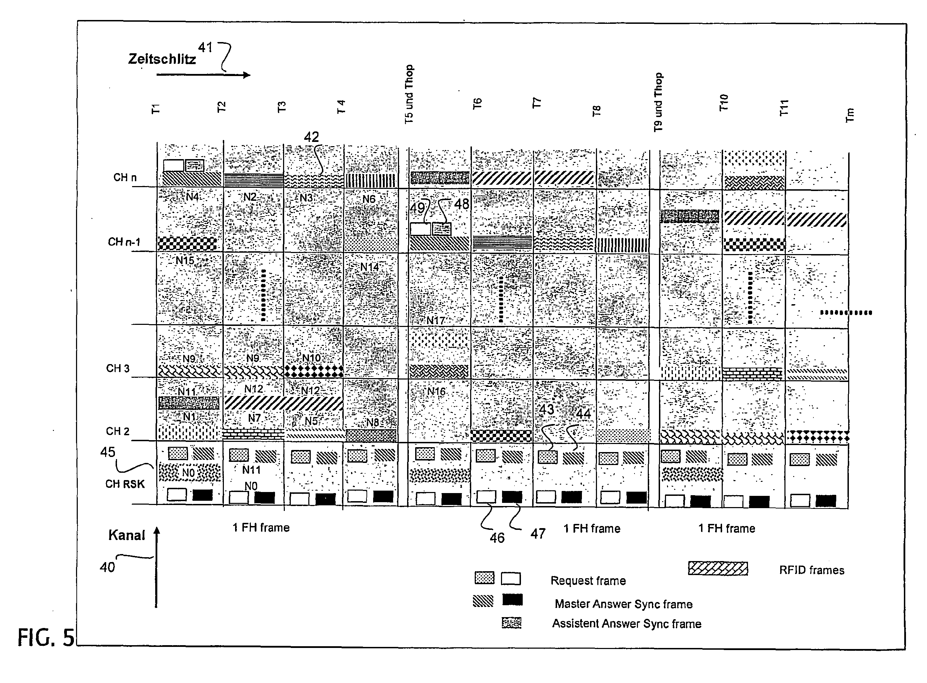

Figur 5 zeigt die dritte grundsätzliche Art, welche auf einen RST Zeitschlitz verzichtet und dafür mit einem kontinuierlich zur Verfügung stehenden RSK Frequenzkanal 45 operiert. Das Beispiel wurde aus Gründen des Verständnisses nahe zu den anderen beiden Aufteilungen gewählt, wiederum mit Frequency Hopping. Die hinterlegte Netzwerk Topologie entspricht derjenigen aus Fig. 2, also mit 18 Schreib-/Lesestationen N0 bis N17. Ein Beispiel sei erläutert: Schreib-/Lesestation N3 ist aktiv im Zeitschlitz 42 zur Zeit T3 auf der Frequenz 40 im Kanal CHn, sowie im folgenden Intervall zu T7 auf CHn-1.

Tatsächlich wird aber nicht auf den RST wirklich verzichtet, sondern jede Schreib-/Lesestation sucht unmittelbar nach ihrem Schreib-/Lesebetrieb den RSK 45 auf und findet dort während dem nächsten Intervall, in dem sie keinen Betrieb vorgesehen hat, auf jeden Fall einen Zeitschlitz vor, um mit dem Master zu kommunizieren. Ihr RST ist also jeweils individuell unmittelbar nach seinem Schreib-/Leseintervall vorgesehen. Der Master 100 wiederholt die von ihm gesteuerte Synchronisation und Informationen also in jedem Zeitschlitz auf dem RSK 45 von neuem. Der Master 100 selber ist daher in diesem Modell stark beschäftigt mit seinen Children.

Der Master N0 100 hat daher zweckmässigerweise selber wenig Schreib-/Leseaufgaben und kann diese in jeweils einem der Zeitschlitze auf dem RSK 45 gleichzeitig erledigen. Er wechselt mit Vorteil den Kanal nicht, um für alle Children kontinuierlich in dem vorbestimmten Zeitschlitz zur Verfügung zu stehen. Andernfalls müssten die Children wiederum über einen Fahrplan für die Belegung der Frequenzkanäle durch ihren Master verfügen, was dann notwendig ist, wenn ein Frequency Hopping vorgeschrieben ist.

Der unabhängige, kleine Netzwerk-Ast mit seinem Master 102 kann dieselben Frequenzen benutzen, wie der grosse Netzwerk-Teil mit Master 100, da sich die beiden Netzwerke nicht stören. Es kann auch derselbe RSK Kanal 1 benutzt werden. Der Assistent N4, 103 synchronisiert und steuert wiederum seine kleine Anzahl Children N2, N3, N6 direkt, während seinem Schreib-/Lesevorgang. Bei grösseren Assistent-Teilnetzen würde sich ein weiterer RSK 45 anbieten oder eine feinere zeitliche Einteilung der Zeitschlitze innerhalb des RSK 45 nach dem TDMA Verfahren. Alle Schreib-/Lesestationen kehren jeweils nach ihrem Schreib-/Lesevorgang (oder nach mehreren solchen Intervallen je nach Stabilität der Zeitbasis) für einen Zeitschlitz auf den RSK 45, um Synchronisation und Datenaustausch durchzuführen. Des Weiteren können wiederum Informationen betreffend Änderungen im Netzwerkbetrieb übermittelt werden (weisse Blöcke 46 im RSK 45). Die Schreib-/Lesestationen haben zudem die Möglichkeit, schwarzer Block 47, ihrerseits Meldungen an den Master 100 zu übermitteln. Der Assistent 103 kommuniziert sinngemäss während seinem Lesebetrieb mit seinen wenigen Children N2, N3, N4 in den Blöcken 48, 49. Analog besitzt der Master 102 solche Datenaustausch-Blöcke 43, 44.

In der Praxis, abhängig von der RFID-Netzwerkgrösse und -Topologie können auch Mischformen dieser 3 Grundmodelle benutzt werden. Vorteilhaft ist erfindungsgemäss in jedem Fall die Erreichung von Datenaustausch und Synchronisation ohne externe Geräte oder Backbone-Netzwerke bei minimalem Verlust an Ressourcen von Frequenzkanälen und operativen Zeitschlitzen.

Alle im 1. Modell beschriebenen Aussagen zur Aktivität während dem RST sind in diesem Modell sinngemäss ebenfalls anwendbar.

### C. Reservation eines Schreib-/Lesefensters

Muss eine Schreib-/Lesestation einen Frequenzkanal und/oder Zeitschlitz (genannt Paar) sofort zu seiner Verfügung haben (d.h. mit hoher Priorität), so kann sie dies im nächsten RST an sein Parent melden mit Hilfe des RSSignals direkt auf dem Physical Air Interface. Der Parent (Master 100 oder Assistent 103) disponiert dabei die Fahrpläne (Schedules) anderer Schreib-/Lesestationen so um, dass ein freies Paar entsteht und erteilt dem Child die Bewilligung über das RSSignal, während er gleichzeitig ein anderes Child im besagten Paar blockiert, das dieses Paar sonst wie vorgesehen benutzt hätte. Jeder Parent kann nur die Paare seiner Children verwalten. Die Zeitschlitze sind vorzugsweise relativ nummeriert, so dass ein Paar durch eine Adresse mit zwei ganzen Zahlen beschrieben werden kann und in jeder Schreib-/Lesestation die Positionen eines Schreib-Lese-Slots einfach berechenbar werden.

In der Beispiel Ausführung von Fig. 3 und 4 geschieht dieser Reservationsvorgang jeweils in den Zeitschlitzen RST 23 bzw. 33 durch Kommunikation in den Blöcken 24, 25 bzw. 34, 35. Im Beispiel von Fig. 5 auf dem Kanal RSK 45 während irgendeinem der Zeitschlitze in den Blöcken 46, 47, jedoch mit einer bestimmten Wartezeit bis zur Durchführung, nämlich bis ein Zeitschlitz sicher frei gemacht werden konnte. Kollisionen bringen keiner Schreib-/Lesestation einen Vorteil, der schnellste Weg bleibt derjenige der ausgehandelten Reservation.

### D. Kooperative Schreib-/Lesestationen Operationen

In vielen gängigen RFID-Anwendungen werden mehrere Schreib-/Lesestationen, eine kooperative Gruppe 101, auf das Lesen von Etiketten-Haufen angesetzt. Man kann auf diese Weise mehr Etiketten (Tags) in derselben Zeit mit mehr Sicherheit lesen, zum Beispiel bei Waren-Paletten. Dazu wird mindestens eine Schreib-/Lesestation als Lieferant von Energie- und RF-Trägersignal bestimmt, welcher die Tags versorgt, während alle beteiligten Schreib-/Lesestationen zugleich versuchen, soviel Information wie möglich von den Tags zu erhalten. Hiernach werden die gelesenen Daten zusammengetragen und in der System-Middleware fusioniert. Damit das Timing von den übrigen Schreib-/Lesestationen genau mit dem Timing der sendenden Schreib-/Lesestation übereinstimmt ist eine besonders gute Synchronisation hilfreich. Dies kann einfach mit Hilfe des RSSignals direkt auf dem Physical Air Interface erfolgen, nachdem die Schreib-/Lesestationen vorgängig zu einer kooperativen Gruppe 101 zusammengefasst wurden. Ein solcher Operations-Modus kann dauerhaft bereits bei der Inbetriebnahme vorgesehen werden oder temporär durch Konfigurationsmeldungen vom Master 100 (oder Assistent 103) ebenfalls mit Hilfe des RSSignals direkt auf dem Physical Air Interface im RST Slot oder auf der RSK Frequenz bewerkstelligt werden.

### E. Extern synchronisierter Schreib-/Lesevorgang

In einigen RFID-Anwendungen werden die Schreib-/Lesestationen durch externe Vorgänge wie Lichtschranken oder Endschalter zum Lesen von Tags aufgefordert (Trigger genannt). Während der übrigen Zeit sind solche Schreib-/Lesestationen nicht aktiv. Nach einem Trigger-Ereignis sollte eine solche Schreib-/Lesestation aber möglichst schnell aktiv sein, um die unter Umständen bewegten Tags nicht zu verpassen. Diese Trigger-Zeitpunkte fallen normalerweise nicht mit den Zeitschlitzen des Netzwerk Fahrplans zusammen. Bei nicht allzu grosser Anzahl von Schreib-/Lesestationen in einem Netzwerk kann die getriggerte Schreib-/Lesestation auf ihr nächstes Zeitfenster warten (z.B. 2 Sekunden). Bei rascherer Reaktionszeit oder grosser Anzahl Schreib-/Lesestationen wird durch das Triggersignal in der Schreib-/Lesestation eine Alarm-Meldung generiert und auf dem RSSignal abgesetzt. Die übrigen RFID-Netzwerkteilnehmer auf derselben Frequenz lassen darauf hin ihren nächsten geplanten Zeitschlitz für den Lesevorgang ausfallen und verhindern damit eine Störung des reservierten Zeitschlitzes. Dies funktioniert im Falle von Frequency Hopping nur dann, wenn die Schreib-/Lesestationen momentan den gleichen Frequenzkanal und die gleiche Frequency Hopping Sequenz benutzen. Dies kann im Fahrplan ohne Nachteil so vorgesehen werden.

In einem bevorzugten Fall nach Fig. 5 kann auch eine sofortige Reservation beim Master 100 über den RSK 45 genügend schnell erfolgen. Der Master 100 regelt danach den Zugriff für den nächsten Slot bzw. gibt ein bereits voraussehbares freies Slot/Frequenz-Paar an die getriggerte Schreib-/Lesestation zurück.

In einer anderen Ausführung können auch spezielle Frequenzkanäle und oder Frequenzkanal/Zeitschlitz Sequenzen für getriggerte Schreib-/Lesestationen reserviert werden, die dort Priorität geniessen. Diese Schreib-/Lesestationen bilden dann bevorzugt ein eigenes Subnetz, eventuell mit einem dedizierten Assistenten. Der Fahrplan bezüglich Zeitschlitze wird sodann nach vorgegebenen Prioritäten und dem "first come first serve"-Prinzip dynamisch verwaltet. Es ist anzumerken, dass es keinen anderen Weg gibt, schnelleren Zugriff zu bekommen, wenn alle Ressourcen ausgelastet sind ausser zu warten. Kollisionen zweier Schreib-/Lesestation-Schreib-/Lesezyklen bringen keine Vorteile.

### F. Temporäre mobile Schreib-/Lesestation Insertion

Muss in einer Applikation eine Schreib-/Lesestation zusätzlich ins Netzwerk eingebunden werden oder bewegen sich mobile Schreib-/Lesestationen (z.B. Gabelstapler) im Netzwerk, so muss dafür gesorgt werden, dass die Störsituation sich nicht verschlechtert. Dies wird erfindungsgemäss bevorzugt über eine Anmeldung der Schreib-/Lesestation mit Hilfe des RSSignals durchgeführt. Da sich die Schreib-/Lesestation an verschiedenen Einsatzorten im Netzwerk befinden kann, muss sie sich durch Hinhören mit dem Netzwerk synchronisieren und dabei über die Parameter des RSK bzw. RST informieren. Danach wird sie ihre Anmeldung an den Master 100 oder Assistenten 103 synchron absetzen. Dieser generiert daraufhin ein Frequenz/Zeitschlitz-Paar, welches an die mobile Schreib-/Lesestation zurückgesendet wird. Danach kann die mobile Schreib-/Lesestation in diesem Bereich arbeiten.

In einer anderen bevorzugten Methode beobachtet die mobile Schreib-/Lesestation während einer gewissen Zeit die Nachbarschaft und erstellt eine Tabelle mit Signalstärken und Adressen. Auf Grund der Tabelle wählt die mobile Schreib-/Lesestation, oder noch bevorzugter, eine neu ins Netzwerk gebrachte Schreib-/Lesestation einen Master 100 oder Assistenten 103 aus und erhält von diesem einen Satz Konfigurations-Daten (Frequenz/Zeitschlitz-Paare etc.) für den Betrieb. Wurde ein Assistent ausgewählt und besitzt dieser keine freien Paare mehr, so startet er selber eine Anfrage beim Master, um ein zusätzliches Paar zu erhalten.

### G. Frequency Hopping und Frequency Agile Systeme

Bei Frequency Hopping oder Frequenz-agilen RFID-Netzwerken entsteht die Situation, dass Parent und Children nicht mehr unbedingt längere Zeit auf derselben Frequenz weiterfahren, insbesondere, wenn die Anzahl Stationen grösser ist, als das Produkt aus Anzahl Frequenzkanälen und Anzahl Zeitschlitzen. Damit verlöre das System ohne Gegenmassnahme beim Verfahren seine Struktur, beziehungsweise hätte für jeden Hop eine neue Netzwerktopologie. Mit Hilfe des RSSignals und der Methode des Reader Service Kanal RSK und der Reader Service Time RST kann jedoch auch hier eine gute Lösung gefunden werden.

Prinzipiell könnte jede Schreib-/Lesestation die Hopping Sequenzen seiner Parents kennen und so für Service Zwecke den Funkkanal kurzzeitig zur richtigen Zeit auf die richtige Frequenz wechseln. Einfacher und sicherer ist es jedoch, wenn alle Schreib-/Lesestationen wie im vorgeschlagenen Verfahren nach Modell 1 oder 3 periodisch in den RSK 22 bzw. 45 wechseln, welcher sich in der Frequenz nicht ändert und vom Master 100 betrieben wird. Dies kann im Modell 1 im nächsten RST 23 oder im Modell 3 direkt nach dem jeweiligen aktiven Schreib-/Leseintervall auf dem Frequenzkanal 45 geschehen. Bei diesem RSK- Besuch können Meldungen an andere Schreib-/Lesestationen deponiert werden oder von anderen Schreib-/Lesestationen entgegengenommen werden. Der Master (oder Assistent) bildet dabei eine Art Relaisstation zwischen den sich wechselnden Kanälen unter Benutzung der Blöcke 24, 25 bzw. 46, 47, deren Anzahl pro Zeitschlitz auch leicht auf mehr als zwei erweitert werden kann.

Schreib-/Lesestationen, welche aus irgendeinem Grund einmal ausser Synchronisation geraten sind, finden in der Lösung mit RSK und RST Slots immer wieder zum synchronen Betrieb zurück, indem sie sich einfach in den RSK umschalten, sich durch Zuhören neu synchronisieren, sich melden und nötigenfalls ihren Datensatz anpassen. Da die Verweilzeit pro Frequenz regulatorisch gegeben ist (z.B. 400 ms bei Frequency Hopping, 4 s bei adaptivem Hopping), können sich nur einige Schreib-/Lesestationen denselben Kanal pro Hopping Intervall (T1 bis T4 in Fig. 5) teilen, vorzugsweise zumindest Schreib-/Lesestationen, welche hin und wieder in kooperativen Gruppen 101 zusammenarbeiten müssen. Es können in Abweichung zu den Fig. 3a, b bis 5 Situationen auftreten, bei denen die Lesezeit länger dauert, als die Verweilzeit auf einer Frequenz. Solche Sprünge in der Frequenz während dem Lesevorgang sind an sich nicht störend, solange sie bitsynchron zum Etiketten-Datenstrom vorgenommen werden, da die Sprünge im Empfänger rückgängig gemacht werden durch die Benutzung desselben RF-Trägersignals zum Heruntermischen wie im Sender zum Heraufmischen. Die Frequency Hopping Rate ändert somit das Verfahrensprinzip nicht, sie sollte einzig vorteilhaft ein ganzzahliges Vielfaches oder Teiler der Zeitschlitzdauer betragen.

Frequenz-agile Systeme führen einen Frequenzwechsel nur dann aus, wenn ein äusserer Grund vorliegt, wie etwa eine Kanalstörung. Der Wechsel kann durch eine Schreib-/Lesestation nur dann selbständig vorgenommen werden, wenn genügend Kanäle zur Verfügung stehen und der Schreib-/Lesestation ein Ausweichkanal bei der Konfiguration einprogrammiert wurde. Stehen nicht genügend Reservekanäle oder Zeitschlitze bereit, um derart zu verfahren, so wird die Agilität durch den Master oder Assistenten gesteuert auf Grund einer Meldung eines der Children. Dabei kann sich das gesamte Netzwerk agil verhalten, vergleichbar einem manuellen Frequency Hop. Oder es werden einzelne Knoten mit neuen Frequenz-/Zeitschlitz Daten im Rahmen eines RSK/RST Besuchs versorgt, entsprechend 23 in Fig. 3a, 33 in Fig. 4, 45 in Fig.5. Die Intelligenz zur Agilität verbleibt in jedem Fall beim Master 100, allenfalls beim Assistenten 103.

Ein Master kann auch einzelne Schreib-/Lesestationen veranlassen, eine neue Nachbarschaftssuche durchzuführen und ihre Daten darüber zur agilen Planung im nächsten RSK/RST Zeitschlitz mit Hilfe des RSSignals abzuliefern.

### H. Interferenz-Situationen

Stellt eine Schreib-/Lesestation fest, dass der ihr zugeteilte Frequenzkanal zur zugeteilten Zeit häufig durch Interferenzen belegt ist, und diese Interferenzen von einer anderen Schreib-/Lesestation verursacht werden (Erkennung auf Grund der ausgesendeten Adresse auf dem RSSignal), so hat sich entweder das Timing eines der Beteiligten verschoben oder durch andere Schreib-/Lesestationen die Anordnung, z.B. der Antennen, oder die Ausbreitungssituation (Funksignalpfade) verändert. In diesem Fall wechselt die Schreib-/Lesestation in den RSK und synchronisiert sich neu, in dem sie auf das nächste Signal des Parent im RSK/RST wartet, entsprechend 23 in Fig. 3, 33 in Fig. 4, 45 in Fig.5.

Besteht ein Interferenzproblem, dass nicht auf Synchronisationsverlust beruht, so meldet sie nach erfolgter Synchronisation im RSK/RST das Problem und verlangt ein neues Paar an Zeit-/Frequenz-Slot. Die Interferenzen werden im Master als Log-File mit Zeitangabe gesammelt und ergeben eine Langzeitanalyse für den System-Service. Nicht durch RFID-Schreib-/Lesestationen bedingte Störer lassen sich damit ebenfalls identifizieren und vermeiden.

## Patentansprüche

1. Verfahren zum Betrieb eines RFID-Netzwerks, bestehend aus einer Anzahl Schreib-/Lesestationen (1, 2, 3, 11, NO-N17), welchen auf einem für das Bearbeiten von einer Anzahl elektronischer Etiketten (6) notwendigen Schreib-/Lesesignal ein Reader Service Signal (9, 105) aufmoduliert ist, **dadurch gekennzeichnet, dass**
- mindestens eine Schreib-/Lesestation (1, 2, 3, 11, NO-N17) mit der Aufgabe eines Masters (100) betraut wird, der eine Netzwerkstruktur (110) mit Strukturdaten und einen Koordinationsplan mit Koordinationsdaten abgespeichert hat,
- der mindestens eine Master (100) den Schreib-/Lesestationen (1, 2, 3, 11, N0-N17) periodisch und/oder auf Abruf mindestens entsprechende Strukturdaten und Koordinationsdaten für einen geordneten, synchronen Netzwerkbetrieb zusendet, so dass sich die Schreib-/Lesestationen (1, 2, 3, 11, N0-N17) im Schreib-/Lesebetrieb nicht störend beeinflussen, unter Verwendung einer Anzahl Zeitschlitze (21, 31, 41) und einer Anzahl Frequenzkanäle (20, 30, 40), wobei ein Servicefrequenzkanal, Reader Service Kanal, (RSK) und/oder ein Servicezeitschlitzt, Reader Service Time, (RST) bereit stehen, die zur Nachführung der Synchronisation und Veränderung der Struktur- und Koordinationsdaten zwischen dem Master (100) und den Schreib-/Lesestationen (1, 2, 3, 11, NO-N17) genutzt werden.

2. Verfahren nach Anspruch 1, **dadurch gekennzeichnet, dass** mindestens ein Master (100), der als Parent bezeichnet wird, mit allen sternförmig mit ihm verbundenen Schreib-/Lesestationen (1, 2, 3, 11, N0-N17), die als Children, Child, bezeichnet werden, mindestens je eine definierte Funkverbindung unterhält.

3. Verfahren nach Anspruch 1 oder 2, **dadurch gekennzeichnet, dass** die Children zwecks Synchronisation vom Parent eine Sequenz auf dem Reader Service Signal (9, 105) erhalten, wobei die Children für die Dauer des Servicezeitschlitzes, Reader service Time, (RST) in den Servicefrequenzkanal, Reader Service Kanal, (RSK) wechseln.

4. Verfahren nach Anspruch 1 oder 2, **dadurch gekennzeichnet, dass** die Children zwecks Synchronisation vom Parent eine Sequenz auf dem Reader Service Signal (9, 105) erhalten, wobei die Children während des Servicezeitschlitzes, Reader Service Time, (RST) auf ihrem Betriebsfrequenzkanal bleiben und der Parent alle verfügbaren Frequenzkanäle mit der Sequenz beschickt.

5. Verfahren nach Anspruch 1 oder 2, **dadurch gekennzeichnet, dass** die Children zwecks Synchronisation vom Parent eine Sequenz auf dem Reader Service Signal (9, 105) erhalten, wobei die Children nach einem Schreib-/Lesevorgang unmittelbar von einem Betriebsfrequenzkanal in den Servicefrequenzkanal, Reader Service Kanal, (RSK) wechseln.

6. Verfahren nach einem der vorhergehenden Ansprüche, **dadurch gekennzeichnet, dass** eine als Child vom Master (100) agierende Schreib-/Lesestation (1, 2, 3, 11, N0-N17) mit einer Aufgabe eines Assistenten (103) betreut ist, der weitere Children empfangen kann, die keine ausreichende Funkverbindung mit dem Master (100) unterhalten können, wobei der Assistent (103) diese für den Master (100) unerreichbaren Schreib-/Lesestationen (1, 2, 3, 11, N0-N17) entsprechend mit Strukturdaten und Koordinationsdaten vom Master (100) bewirtschaftet.

7. Verfahren nach einem der Ansprüche 3 bis 6, **dadurch gekennzeichnet, dass** neben der Zusendung der Sequenz vom Master (100) bzw. Assistenten (103) zum Child, dieses eine Meldung an seinen Master (100) bzw. Assistenten (103) absetzen kann und der Master (100) bzw. Assistent (103) eine Antwortmeldung (25, 35, 47) übermitteln kann, zwecks Anpassung der Strukturdaten und/oder der Koordinationsdaten.

8. Verfahren nach Anspruch 7, **dadurch gekennzeichnet, dass** ein Child, um eine rasch verfügbare oder zusätzliche Ressource zu erhalten, ein Frequenzkanal/Zeitschlitz-Paar innerhalb des RST/RSK (23, 33, Slot 45) von seinem Parent anfordern kann, und nötigenfalls ein anderes Child vom Parent veranlasst wird, dieses Paar im nächsten Durchgang nicht zu benutzen.

9. Verfahren nach einem der vorhergehenden Ansprüche, **dadurch gekennzeichnet, dass** für einen Schreib-/Lesevorgang, welcher von einem externen Vorgang getriggert wird, der externe Vorgang ein betroffenes Schreib-/Lesegerät veranlasst, eine Alarmmeldung auf dem Reader Service Signal (9, 105) abzusenden, worauf die übrigen Schreib-/Lesestationen auf der gleichen Frequenz ihren nächsten Zeitschlitz ungenutzt verstreichen lassen oder das betroffene Schreib-/Lesegerät veranlasst, im nächst möglichen RSK/RST Intervall eine Anforderung (24,34,46) zur Vergabe eines sofortigen Zeitschlitzes zu tätigen.

10. Verfahren einem der vorhergehenden Ansprüche, **dadurch gekennzeichnet, dass** für eine Schreib-/Lesestation, welche nachträglich ins Netzwerk gebracht wird oder sich mobil durch das Netzwerk bewegt, diese durch Abhören des RSK (22, 30, 45) mit dem bestehenden Netzwerk synchronisiert und über die Strukturdaten und Koordinationsdaten informiert wird, um sich im nächsten RST (23, 33, Slot 45) anzumelden und vom zuständigen Master (100) oder Assistenten (103) ein Frequenz/Zeitschlitz-Datenpaar für den Schreib-/Lesebetrieb zu erhalten.

11. Verfahren einem der vorhergehenden Ansprüche, **dadurch gekennzeichnet, dass** eine Schreib-/Lesestation, welche Störungen in den Frequenzkanälen feststellt, verursacht durch eine andere arbeitende Schreib-/Lesestation oder dritte Funksysteme, auf die nächste Möglichkeit zur Re-Synchronisation mit dem Parent (100, 102, 103) wartet, sich neu synchronisiert und im Falle fortgesetzter Störung dies dem Parent mitteilt und ein Ersatzpaar Frequenzen/Zeitschlitz bekommt.

12. Verfahren nach einem der vorhergehenden Ansprüche, **dadurch gekennzeichnet, dass** der mindestens eine Master (100) entweder eine ausgewählte Schreib-/Lesestation ist und/oder ein Reader Service Terminal (4), welches mit dem Reader Service Signal (9, 105) ausgestattet ist, jedoch selber keine Schreib-/Leseaufgaben durchführt und welche mit einem Server (10) verbunden sind.

13. Verfahren nach einem der vorhergehenden Ansprüche, **dadurch gekennzeichnet, dass** ein Frequenz-agiles Verfahren durchführt wird, wobei die Wechsel der Frequenzkanäle (20, 30, 40) auf Grund von Datenaustausch zwischen Parent (100, 102 oder 103) und Children vorzugsweise synchron mit den Servicezeitschlitzen RST (21, 31, 41) und für die betroffenen Schreib-/Lesestationen zeitgleich erfolgt und der Parent (100, 102, 103) für einen jeweils kollisionsfreien Betrieb verantwortlich ist.

14. Verfahren nach einem der vorhergehenden Ansprüche, **dadurch gekennzeichnet, dass** von allen Schreib-/Lesestationen ein Frequenzsprung- Verfahren durchführt wird, wobei die Wechsel der Frequenzkanäle (20, 30, 40) auf Grund von einer Anzahl den Schreib-/Lesestationen bekannten pseudozufälligen Mustern abläuft, vorzugsweise synchron mit den Servicezeitschlitzen RST (21, 31, 41) und für die betroffenen Schreib-/Lesestationen zeitgleich erfolgt und die Wahl der Abfolge der Frequenzsprünge so gewählt wurde, dass ein jeweils kollisionsfreier Schreib-/Lesebetrieb sichergestellt ist.

## Claims

1. A method for operation of an RFID network, comprising a number of read/write stations (1, 2, 3, 11, NO-N17), in which a reader service signal (9, 105) is modulated on a read/write signal which is required for processing a number of electronic tags (6) **characterized in that**
- at least one read/write station (1, 2, 3, 11, NO-N17) is entrusted with the task of a master (100), which has stored a network structure (110) with structure data and a coordination plan with coordination data,
- the at least one master (100) transmits to the read/write stations (1, 2, 3, 11, N0-N17) periodically and/or on demand at least corresponding structure data and coordination data for organized, synchronous network operation, such that there is no disturbing influence on the read/write stations (1, 2, 3, 11, N0-N17) in the read/write mode, using a number of time slots (21, 31, 41) and a number of frequency channels (20, 30, 40) with a service frequency channel (Reader Service Channel, RSK) and/or a service time slot (Reader Service Time, RST) being provided which are/is used to readjust the synchronization and to change the structure and coordination data between the master (100) and the read/write stations (1, 2, 3, 11, N0-N17).

2. The method as claimed in claim 1,
**characterized in that**
at least one master (100), which is referred to as a parent, in each case maintains at least one defined radio link with all the read/write stations (1, 2, 3, 11, N0-N17) which are connected to it in the form of a star, and are referred to as children (child).

3. The method as claimed in claim 1 or 2, **characterized in that** the children receive a sequence on the reader service signal (9, 105) from the parent for synchronization purposes, with the children changing to the service frequency channel (Reader Service Channel, RSK) for the duration of the service time slot (Reader Service Time, RST).

4. The method as claimed in claim 1 or 2,
**characterized in that**
the children receive a sequence on the reader service signal (9, 105) from the parent for synchronization purposes, with the children remaining on their operating frequency channel during the service time slot (Reader Service Time, RST), and with the parent sending all the available frequency channels with the sequence.

5. The method as claimed in claim 1 or 2,
**characterized in that**
the children receive a sequence on the reader service signal (9, 105) from the parent for synchronization purposes, with the children changing directly from an operating frequency channel to the service frequency channel (Reader Service Channel, RSK) after a read/write process.

6. The method as claimed in one of the preceding claims,
**characterized in that**
a read/write station (1, 2, 3, 11, N0-N17) which is acting as a child of the master (100) is entrusted with a task of an assistant (103) which can receive further children which cannot maintain an adequate radio link with the master (100), with the assistant (103) providing these read/write stations (1, 2, 3, 11, N0-N17), which cannot be accessed by the master (100) with structure data and coordination data from the master (100) as appropriate.

7. The method as claimed in one of claims 3 to 6,
**characterized in that**
in addition to sending the sequence from the master (100) or assistant (103) to the child, the latter can send a message to its master (100) or assistant (103), and the master (100) or assistant (103) can transmit a response message (25, 35, 47) in order to adapt the structure data and/or the coordination data.

8. The method as claimed in claim 7,
**characterized in that**,
in order to receive a quickly available or additional resource, a child can request from its parent a frequency channel/time slot pair within the RST/RSK (23, 33, slot 45)
and, if necessary, the parent can ensure that another child does not use this pair in the next process.

9. The method as claimed in one of the preceding claims,
**characterized in that**,
for a read/write process which is triggered by an external process, the external process causes a relevant reader/writer to send an alarm message on the reader service signal (9, 105), in response to which the other read/write stations on the same frequency can pass their next time slot without using it, or the relevant reader/writer can be caused to make a request (24, 34, 46) for allocation of an immediate time slot in the next possible RSK/RST interval.

10. The method as claimed in one of the preceding claims,
**characterized in that**,
for a read/write station which has been introduced retrospectively into the network or is moving in a mobile manner through the network, this station is synchronized to the existing network by monitoring the RSK (22, 30, 45) and is informed of the structure data and coordination data in order to register in the next RST (23, 33, slot 45) and to receive a frequency/time slot data pair for read/write operation from the responsible master (100) or assistant (103).

11. The method as claimed in one of the preceding claims,
**characterized in that**
a read/write station which finds disturbances in the frequency channels, caused by another operating read/write station or third-party radio systems, waits for the next opportunity for resynchronization with the parent (100, 102, 103), is resynchronized and, if the disturbance continues, signals this to the parent and receives a substitute pair of frequencies/time slot.

12. The method as claimed in one of the preceding claims,
**characterized in that**
the at least one master (100) is either a selected read/write station and/or a reader service terminal (4) which is equipped with the reader service signal (9, 105)
but does not itself carry out any read/write tasks, and which are connected to a server (10).

13. The method as claimed in one of the preceding claims,
**characterized in that**
a frequency-agile method is carried out, with the change in the frequency channels (20, 30, 40) taking place at the same time, preferably synchronously with the service time slots RST (21, 31, 41) and for the relevant read/write stations on the basis of data interchange between the parent (100, 102 or 103) and the children, and with the parent (100, 102, 103) being responsible for respective collision-free operation.

14. The method as claimed in one of the preceding claims,
**characterized in that**
a frequency hopping method is carried out by all the read/write stations, with the change in the frequency channels (20, 30, 40) being carried out on the basis of a number of pseudo-random patterns which are known to the read/write stations, preferably synchronously with the service time slots RST (21, 31, 41) and at the same time for the relevant read/write stations, and with the choice of the sequence of the frequency hops being made so as to ensure collision-free read/write operation in each case.

## Revendications

1. Procédé permettant de faire fonctionner un réseau RFID composé d'une pluralité de stations d'écriture/lecture (1, 2, 3, 11, N0-N17), sur lesquelles, sur un signal d'écriture/lecture nécessaire pour le traitement d'une pluralité d'étiquettes électroniques (6), est modulé un Reader Service Signal (9, 105), **caractérisé en ce**
- **qu'**à moins une station d'écriture/lecture (1, 2, 3, 11, N0-N17) est confiée la fonction de maître (100) dans lequel est mémorisée une structure de réseau (110) avec des données de structure et un plan de coordination avec des données de coordination,
- **que** ledit au moins un maître (100) envoie aux stations d'écriture/lecture (1, 2, 3, 11, N0-N17) périodiquement et/ou à la demande au moins des données de structure et des données de coordination correspondantes pour un fonctionnement ordonné synchrone du réseau, de sorte que les stations d'écriture/lecture (1, 2, 3, 11, N0-N17) ne s'influencent pas de manière gênante en écriture/lecture, en utilisant une pluralité de créneaux horaires (21, 31, 41) et une pluralité de canaux de fréquence (20, 30, 40), un canal de fréquence de service, Reader Service Canal (RSK), et/ou un créneau horaire de service, Reader Service Time (RST), étant disponibles et utilisés pour actualiser la synchronisation et la modification des données de structure et de coordination entre le maître (100) et les stations d'écriture/lecture (1, 2, 3, 11, N0-N17).

2. Procédé selon la revendication 1, **caractérisé en ce qu'**au moins un maître (100), qui est désigné par parent, entretient avec chacune des stations d'écriture/lecture (1, 2, 3, 11, N0-N17) qui y sont reliées en étoile et qui sont désignées par enfant(s), au moins une liaison hertzienne définie.

3. Procédé selon la revendication 1 ou 2, **caractérisé en ce que** les enfants reçoivent du parent, dans un but de synchronisation, une séquence sur le Reader Service Signal (9, 105), les enfants passant, pendant la durée du créneau horaire de service, Reader Service Time (RST), dans le canal de fréquence de service, Reader Service Canal (RSK).

4. Procédé selon la revendication 1 ou 2, **caractérisé en ce que** les enfants reçoivent du parent, dans un but de synchronisation, une séquence sur le Reader Service Signal (9, 105), les enfants restant pendant le créneau horaire de service, Reader Service Time (RST), sur leur canal de fréquence de fonctionnement et le parent chargeant tous les canaux de fréquence disponibles avec la séquence.

5. Procédé selon la revendication 1 ou 2, **caractérisé en ce que** les enfants reçoivent du parent, dans un but de synchronisation, une séquence sur le Reader Service Signal (9, 105), les enfants passant, après une opération d'écriture/lecture directement d'un canal de fréquence de fonctionnement dans le canal de fréquence de service, Reader Service Canal (RSK).

6. Procédé selon l'une des revendications précédentes, **caractérisé en ce qu'**à une station d'écriture/lecture (1, 2, 3, 11, N0-N17) agissant en tant qu'enfant du maître (100) est confiée la fonction d'un assistant (103) qui peut recevoir d'autres enfants qui ne peuvent pas entretenir une liaison hertzienne suffisante avec le maître (100), l'assistant (103) exploitant ces stations d'écriture/lecture (1, 2, 3, 11, N0-N17) inaccessibles pour le maître (100) en conséquence avec des données de structure et des données de coordination du maître (100).

7. Procédé selon l'une des revendications 3 à 6, **caractérisé en ce qu'**en plus de l'envoi de la séquence du maître (100) ou de l'assistant (103) à l'enfant, ce dernier peut déposer un message pour son maître (100) ou pour l'assistant (103) et le maître (100) ou l'assistant (103) peut transmettre un message de réponse (25, 35, 47) dans un but d'adaptation des données de structure et/ou des données de coordination.

8. Procédé selon la revendication 7, **caractérisé en ce qu'**un enfant peut, pour obtenir une ressource rapidement disponible ou supplémentaire, demander à son parent une paire canal de fréquence/créneau horaire à l'intérieur du RST/RSK (23, 33, Slot 45) et, si nécessaire, obtenir du parent qu'il ordonne à un autre enfant de ne pas utiliser cette paire au prochain cycle.

9. Procédé selon l'une des revendications précédentes, **caractérisé en ce que** pour une opération d'écriture/lecture qui est déclenchée par un processus externe, le processus externe amène un dispositif d'écriture/lecture concerné à envoyer un signal d'alarme sur le Reader Service Signal (9, 105), suite à quoi les stations d'écriture/lecture restantes sur la même fréquence laissent passer leur prochain créneau horaire sans l'utiliser, ou amène le dispositif d'écriture/lecture concerné à faire, dans le plus proche intervalle RST/RSK possible, une demande (24, 34, 36) d'attribution immédiate d'un créneau horaire.

10. Procédé selon l'une des revendications précédentes, **caractérisé en ce que** pour une station d'écriture/lecture qui est apportée ultérieurement dans le réseau ou qui se déplace de manière mobile à travers le réseau, celle-ci est synchronisée avec le réseau existant par écoute du RSK (22, 30, 45) et informée par l'intermédiaire des données de structure et des données de coordination, afin de s'annoncer au prochain RST (23, 33, Slot 45) et recevoir du maître (100) ou de l'assistant (103) concerné une paire de données fréquence/créneau horaire pour l'écriture/lecture.

11. Procédé selon l'une des revendications précédentes, **caractérisé en ce qu'**une station d'écriture/lecture qui constate des perturbations dans les canaux de fréquence, provoquées par une autre station d'écriture/lecture qui travaille ou par des systèmes hertziens tiers, attend la prochaine occasion de resynchronisation avec le parent (100, 102, 103), se resynchronise et, si la perturbation persiste, le signale au parent et reçoit une paire fréquences/créneau horaire de remplacement.

12. Procédé selon l'une des revendications précédentes, **caractérisé en ce que** ledit au moins un maître (100) est une station d'écriture/lecture sélectionnée et/ou un Reader Service Terminal (4), lequel est équipé du Reader Service Signal (9, 105) mais n'accomplit pas lui-même de fonctions d'écriture/lecture et lequel est relié à un serveur (10).

13. Procédé selon l'une des revendications précédentes, **caractérisé en ce qu'**un procédé agile en fréquences est réalisé, le changement de canaux de fréquence (20, 30, 40) ayant lieu sur la base d'un échange de données entre parent (100, 102 ou 103) et enfants de préférence de manière synchrone avec les créneaux horaires de service RST (21, 31, 41) et en même temps pour les stations d'écriture/lecture concernées, et le parent (100, 102, 103) étant responsable à chaque fois d'un fonctionnement sans collisions.

14. Procédé selon l'une des revendications précédentes, **caractérisé en ce que** toutes les stations d'écriture/lecture exécutent un procédé de saut de fréquence, le changement de canaux de fréquence (20, 30, 40) ayant lieu sur la base d'une pluralité de motifs pseudo-aléatoires connus des stations d'écriture/lecture, de préférence de manière synchrone avec les créneaux horaires de service RST (21, 31, 41) et en même temps pour les stations d'écriture/lecture concernées, et le choix de la suite de sauts de fréquence ayant été fait de manière à assurer à chaque fois une écriture/lecture sans collisions.
